# EUROPEAN PATENT SPECIFICATION

(11) **EP 2 478 279 B1**
(45) Date of publication and mention of the grant of the patent: **24.07.2013**
(21) Application number: 10760901.8
(22) Date of filing: 14.09.2010
(51) Int. Cl.: F16K 24/04

(54) **A VENTING VALVE FOR CARGO TANKS**
ENTLÜFTUNGSVENTIL FÜR LADETANK
SOUPAPE DE MISE À L'AIR LIBRE POUR CITERNES À MARCHANDISES

(30) Priority: 15.09.2009 DK 200901028; 28.09.2009 DK 200901066
(43) Date of publication of application: 25.07.2012
(73) Proprietor: Sørensen, Eric Aarestrup, Finchampstead, Wokingham RG40 3SS (GB)
(72) Inventor: Sørensen, Eric Aarestrup, Finchampstead, Wokingham RG40 3SS (GB)
(74) Representative: Rørdam, Troels Peter
(86) International application number: PCT/DK2010/050234
(87) International publication number: WO 2011/032561

(56) References cited:
- WO-A1-00/40881
- WO-A1-03/031852
- GB-A- 1 534 937
- GB-A- 2 243 431
- US-A1- 2004 089 347

## Description

The invention relates to a venting valve intended for equalizing overpressure in cargo tanks in, for instance, oil tankers, wherein said valve comprises a valve housing with an axially movable valve body and a thereto associated valve seat, wherein the position of the valve body relative to the valve seat is dependent on the pressure in the cargo tank.

There are international regulations for type approval/test of equipment in connection with pressure valves for use in cargo tanks found onboard oil tankers. A substantial provision in these regulations is for the valve in a test set-up to show that valve oscillations having a frequency inferior to 0,5 Hz will at no point in time arise in consequence of an open/close cycle.

In order to comply with this problem, it is chosen to use valves with a large blow-down (the difference between the pressure at which the valve opens and the pressure at which the valve closes). One example of this is known from WO 93/16310, where a magnet is used to increase the opening pressure. However, this method has an undesirable effect, since a large amount of gas is let out each time the valve opens until the pressure in the tank has fallen to the level at which the valve closes. The disadvantage of the method is that the pressure in the tank has decreased to such an extent that the cargo boils off in order to reestablish its steam pressure when the valve is closed again. This results in cargo loss as well as significant environmental pollution. The problem could be solved by using a valve with continuously increasing pressure loss, but such a valve would have a considerable size, resulting in unacceptable costs. Another known solution is a valve controlled by a so called pilot valve, whereby pressure increase is avoided and the amount of outlet gas is minimized. This is a correspondingly costly solution.

The valves are generally used to vent a tank during filling and the gases are, naturally, let out into the surrounding air. It is a necessity in order to fill up the tank.

Thermal pressure increases in the ship's tank arise during the ship's voyage, said pressure increases being, for instance, consequence of solar heating. These pressure increases are also vented through the valve - it is in these situations that a large blow-down causes significant cargo loss and environmental pollution.

A cargo tank found onboard an oil tanker can only withstand relatively small overpressures, the limit is frequently around 25 kPa. At the same time, to maintain as high a pressure in the tank as possible in order to minimize boil-off and if the cargo is classified as toxic, the opening pressure of the pressure equalizing valve should be at least 20 kPa. This means that a very narrow pressure region is available for venting when one considers pressure drop over the pressure equalizing valve and pressure drop in the associated piping system.

The object of the invention is to provide a valve to be used for venting large as well as small amounts of gas, wherein the valve is a very simple mechanical unit that may also be used on a ship's deck and wherein the valve doesn't oscillate inadmissibly as well as wherein the valve may operate within a narrow pressure region, the size of which is mentioned above.

This object is achieved by the valve body that is hollow and adapted to receive a further valve body, and that, for interaction with the further valve body, a further valve seat is provided at the end of the valve body that extends outside the valve, wherein the characteristics of the interacting valve body/valve seat and the further valve body/valve seat respectively are mutually different.

The one valve function is dimensioned for venting large amounts of gas, while the second valve function is dimensioned for venting small amounts of gas. For the sake of convenience a primary and a secondary valve will be discussed, where the primary valve comprises the valve body and the valve seat that are adapted to let out large amounts of gas and where the secondary valve comprises the further valve body and the further valve seat that are adapted, since the secondary valve is provided in the primary valve, to let out small amounts of gas.

The primary valve may be realized with magnets, for instance as shown in WO 93/16310, but it may also comprise other means for adapting the valve to the current requirement. For instance, the valve body and the valve housing may, when viewed in an axial section, be shaped in such a way that the flow area between said parts is dependent on the position of the valve body in the valve housing, see for instance the valve known from US 5 060 688.

Other pressure relief valves for containers have been disclosed for example in documents WO 00/40881 or US 2004/0089347. The properties of the valve may be changed by spring-loading the valve or by using the valve body's own weight to close the valve.

In a preferred embodiment, the secondary valve is arranged concentric with the primary valve. This means that the secondary valve body is concentrically arranged in the primary valve body and adapted for axial movement relative to the secondary valve seat that is provided at the end of the valve body that extends outside the valve and that channels are provided in the valve body in such a way that the pressure in the cargo tank actuates the secondary valve body away from the secondary valve seat.

The valve bodies may, in different embodiments, be spring-loaded, weight-loaded and/or adjustable in different ways.

By using magnets, it is, as mentioned above, desired to keep the valve closed up to a certain, increased, gas pressure, whereupon the primary valve opens up as much and as soon as possible. In a particular embodiment, the part of the valve body that is positioned outside the valve housing comprises a substantially cylindrical region that has larger diameter than the clearance hole in the valve seat and that is adapted to interact with a projecting skirt on the valve housing, wherein the outer contour of the cylindrical region corresponds to the inner contour of the skirt.

This construction results in the increased gas pressure on the primary valve body when the gas acts on the cylindrical region with larger diameter in such a way for the primary valve to open up faster. This embodiment incurs a particular advantage in connection with installations with a significant pressure loss, for instance, in consequence of long pipe connections between the storage tank and the valve.

The height of the skirt is adjusted according to the current requirements and may, in an embodiment, be approximately the half of the total stroke length of the valve body. Similarly, the diameter of the cylindrical region is adjusted according to the conditions and may, for instance, be approximately 10 % larger than the clearance hole of the valve seat.

The invention will be explained in more detail in the following description of an embodiment that is shown in the drawings.
Fig 1 is a section view of one embodiment of the valve according to the invention.
Figs 2-4 show the relation between the pressure and the flow volume in order to explain the invention.
Figs 5 and 6 show a further embodiment of the invention.

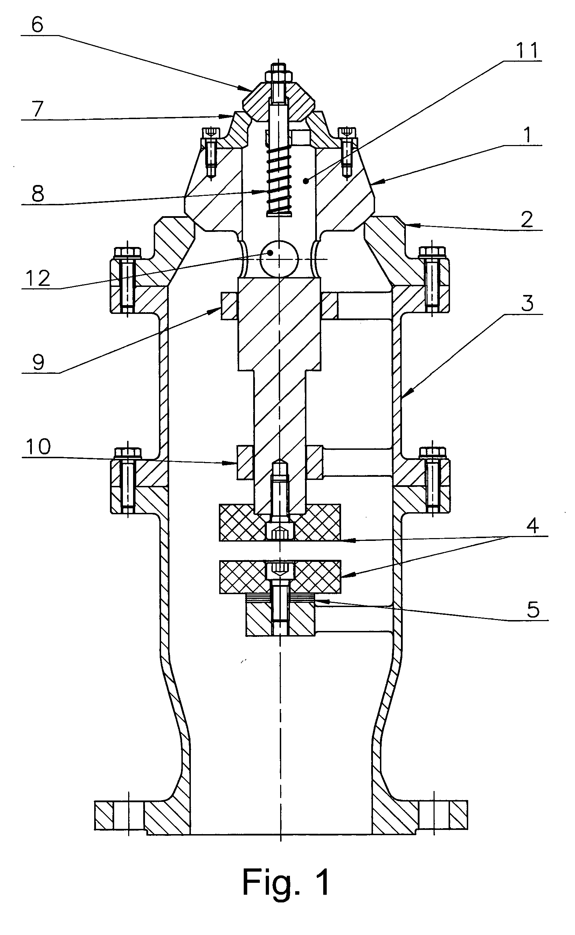

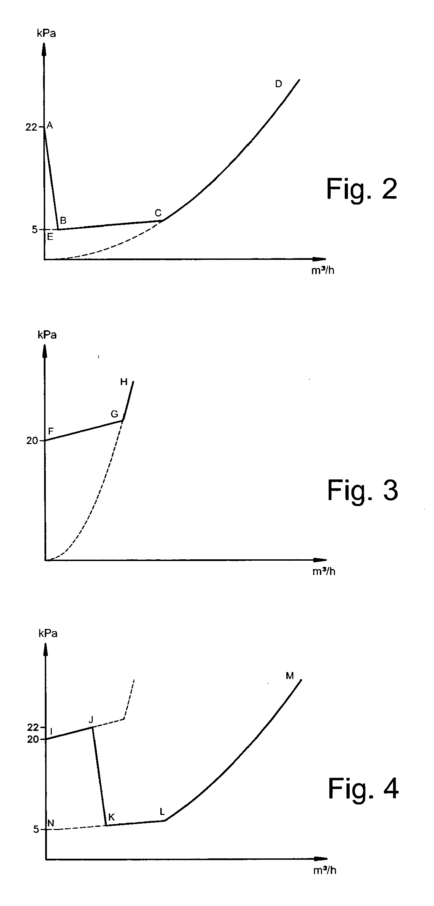

Fig 1 shows a valve housing 3 that is open towards the bottom, at which the housing is adapted to be attached to a cargo tank or a pipe of a cargo tank. The valve housing 3 has inner bearings 9, 10 for arranging a valve body 1 in order to make it movable up and down. In the lowermost position, the valve body rests against a valve seat 2. The gas pressure in the tank forces the lower side of the valve body 1 to open in spite of the valve body's own weight and the force exerted by a couple of magnets 4. The position of the magnets may be changed by means of disks 5 in order to adjust the valve to the current requirement. It is to be understood that the pressure increase should be relatively large in order for the magnets to be separated from each other, whereupon a counterforce becomes significantly lower so that the valve closes again at a relatively low pressure. This will be explained in more detail in conjunction with Figs 2-4.

According to the invention, the valve body 1 is hollow and comprises holes 12 so that the gas pressure in the tank also is, via the holes 12, present in a cavity 11. A secondary valve, comprising a valve body 6 that is arranged in a guide 9, 10 and loaded by means of a spring 8 in such a way that the valve body 6 rests against a valve seat 7 for as long as the pressure in the cargo tank cannot overcome the force from the spring 8 and the valve body's 6 own weight, is provided in the top of the hollow valve body 1. When the pressure in the cargo tank increases, the secondary valve will open gradually, as will be explained below with reference to Figs 2-4.

The primary valve will have an open/close curve or characteristic as shown in Fig 2, wherein
A: Describes the opening point of the valve, the mass of the valve body and the magnetic force (set in this example at 22 kPa).
B: The pressure under the valve decreases drastically when the valve opens since the magnetic force is put out of action.
C: The valve is fully open and reaches the parabola-shaped curve that describes a fully open valve.
D: The curve CD is followed, until pressure balance is reached.
E: Describes the closing point of the valve, namely the mass of the valve body (set in this example at 5 kPa).
   When a pressure increase occurs in the tank, and the pressure exceeds the point of balance between upwards directed force on the conical body and the downwards directed force from the conical body and the magnetic force, the conical body will move upwards, at which the magnetic force will decrease and the conical body will rise further. The pressure under the conical body decreases to the point B, that is only characterized by the mass of the conical body, for which reason the curve continues to point C where the valve is fully open. The curve is subsequently followed to point D until balance is reached.
   It is therefrom followed, when the pressure begins to decrease in the tank, to the curve DC and further on to the curve CB until the valve closes at E.
   The secondary valve is a modulating valve, that is characterized in that its opening-curve is a straight line. The valve characteristic could then be as shown in Fig 3, wherein:
F: Describes the opening point of the valve (set in this example at 20 kPa).
G: The valve is fully open and reaches the parabola-shaped curve that describes a fully open valve.
H: The curve GH is followed until pressure balance is reached.
   The conical body raises from the seat when a pressure increase occurs in the tank and the pressure exceeds the point of balance F. In case of a sustained pressure increase, the height of lift of the conical body increases proportionally with the pressure until the valve is fully open in point G.
   In case of a further pressure increase, the parabola-shaped curve GH of the valve is followed until pressure balance is reached. When the pressure decreases, the curve HG is followed on to GF, where the valve closes. This type of valve has same opening- and closing pressure.
   Combining the above-mentioned valves results in a new valve characteristic. The valve is designed in such a way that the secondary valve has a slightly smaller set point than the primary valve (in the shown example 20 and 22 kPa respectively). A curve of the thereby achieved valve is shown in Fig 4, wherein:
I: Describes the opening point of the valve (set in this example at 20 kPa).
J: Here the pressure has increased to the opening point of the primary valve.
K: The pressure under the valve decreases drastically in consequence of the previously described change of the magnetic force.
L: The curve KL is followed until the valve is fully open.
M: The parabola-shaped curve is followed until pressure balance is reached.
N: Describes the closing point of the valve.

The pressure will gradually increase in the tank until the opening point I (20 kPa) and will then follow the curve towards J, when the valve is to be used for thermal ventilation. Since only small amounts are to be equalized, the point J is dimensioned in such a way that it cannot be reached during the thermal ventilation. When the pressure decreases, the valve closes again in the point I. In this way, no unnecessary venting of the gases from the cargo occurs.

At first, the pressure in the tank increases to the point I when the valve is used for venting during loading of cargo. In case of the further pressure increase, the curve IJ is followed, at which next part of the valve is activated, for which reason the curves JK and KL are followed until balance is reached on the curve M. The curve M is followed: away from LK and away from KN, until the valve is completely closed at N, when the pressure decreases in consequence of completion of the loading. Large amounts of the gases that were in the empty tank are exhausted here, since they have been displaced by the cargo. The cargo will now fill up the space between the cargo and the top of the tank with a gas having pressure that corresponds to the steam pressure of the cargo.

The unique aspect of the valve according to the invention is that it fulfils the requirement of not having oscillations with a frequency inferior to 0,5 Hz while it, at the same time, provides for reduction of let-off gases from the cargo.

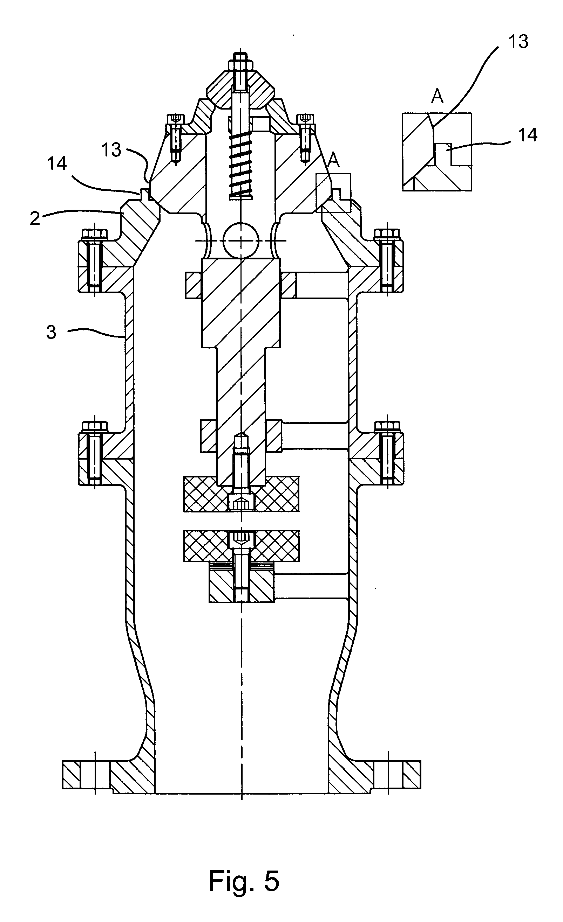

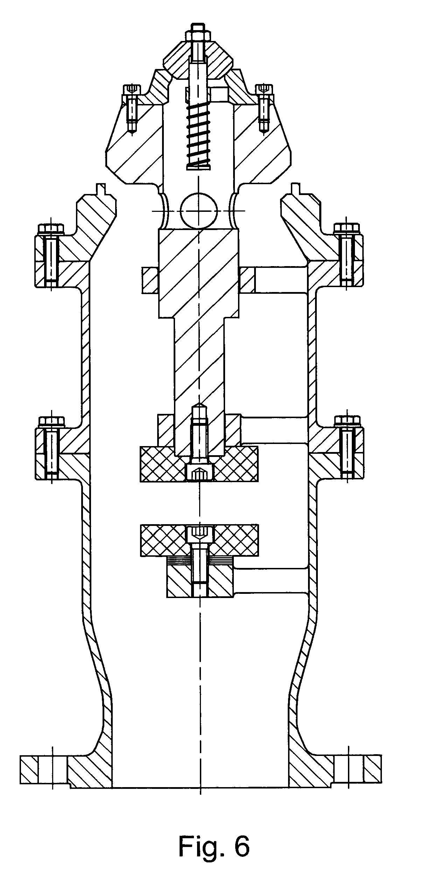

The embodiment that is shown in Figs 5 and 6 is adapted to immediately increase the magnetic gap as much as possible for thereby to ensure that the magnetic force decreases in consequence of the increased distance in the magnetic gap. This is achieved by means of a substantially cylindrical region 13 on the valve body 1, which region is adapted to interact with a skirt 14 on the valve seat 2. The skirt could also be integrated with the valve housing 3, dependent on mutual construction of the valve seat 2 and the valve housing 3. The outer contour of the cylindrical part 13 and the inner contour of the skirt 14 correspond to one another so that there is an utterly small air gap between them. A small amount of air will flow out between the valve body and the seat when the valve starts to open, but the magnetic force would still be relatively large in consequence of the small gap between the magnets. However, the cylindrical part 13 has larger diameter than the clearance hole in the valve seat 2, and the enlarged area implies that the upwards directed force forces the valve body to a larger height of lift and, consequently, a larger magnetic gap (see Fig 6) than what the height of lift would be without the skirt 14.

The skirt is particularly justified when the valve is mounted on long pipes, since the gas pressure on the valve is decisive for determining the allowable length of the pipe that fulfils the requirement that the valve doesn't oscillate faster than 0,5 Hz. The pipe length may be significantly increased by mounting the skirt, since the relatively lower gas pressure, that is a consequence of the friction in the pipe, would still be sufficient to keep the valve in open position.

It is to be understood that the substantially cylindrical region 1 doesn't have to be completely cylindrical. It could, for instance, be polygonal and a corresponding skirt would have analogous technical effect. In consequence of the valve body most often being rotationally symmetric, the term "substantially cylindrical region" has been used.

## Claims

1. A venting valve for cargo tanks in, for instance, oil tankers, said valve comprising a valve housing (3) with an axially movable valve body (1) and a thereto associated valve seat (2), wherein the position of the valve body (1) retative to the valve seat (2) is dependent on the pressure in the cargo tank, the valve body being hollow and adapted to receive a further valve body (6), and **characterized in that**, for interaction with the further valve body (6), a further valve seat (7) is provided at the end of the valve body (1) that extends outside the valve or the valve housing (3), wherein the pressure/flow characteristics of the interacting valve body (1) valve seat (2) and the further valve body (6) valve seat (7) respectively are mutually different.

2. A valve according to claim 1, **characterized in that,** the valve comprises magnets (4) that are provided on the valve body and in the valve housing respectively in such a way that the magnetic force seeks to hold the valve body against the valve seat.

3. A valve according to claim 2, **characterized in that**, at least one of the magnets is adjustable in the axial direction.

4. A valve according to any one of claims 1-3, **characterized in that,** the valve body and the valve housing, viewed in an axial section, are shaped in such a way that the flow area between said parts is dependent on the position of the valve body in the valve housing.

5. A valve according to any one of claims 1-4, **characterized in that,** the valve body is spring-loaded.

6. A valve according to any one of claims 1-5, **characterized in that,** the valve body is weight-loaded.

7. A valve according to any one of claims 1-6, **characterized in that,** the further valve body is concentrically arranged in the valve body and adapted for axial movement relative to the further valve seat that is provided at the end of the valve body that extends outside the valve or the valve housing, and that channels are provided in the valve body in such a way that the pressure in the cargo tank actuates the further valve body away from the further valve seat.

8. A valve according to claim 7, **characterized in that,** the further valve body is spring-loaded.

9. A valve according to claim 7 or 8, **characterized in that,** the further valve body is weight-loaded.

10. A valve according to claim 8 or 9, **characterized in that,** the load is adjustable.

11. A valve according to any one of claims 2-10, wherein the valve interacts with the valve seat in a place that is located between the magnets and an outer part of the valve body, **characterized in** t h a t, the outer part of the valve body comprises a substantially cylindrical region that has a larger diameter than the clearance hole in the valve seat and that is adapted to interact with a projecting skirt (14) on the valve housing, wherein the outer contour of the cylindrical region corresponds to the inner contour of the skirt.

12. A valve according to claim 11, **characterized in that**, the skirt has a height so that the valve body interacts with the skirt along a stroke length that is approximately half of the total stroke length of the valve body.

13. A valve according to claim 11 or 12, **characterized in** t h a t, the diameter of the cylindrical region is approximately 10 % larger than the clearance hole of the valve seat.

## Patentansprüche

1. Entlüftungsventil für Ladetanks in, zum Beispiel, Öltankern, wobei das Ventil ein Ventilgehäuse (3) mit einem axial beweglichen Ventilkörper (1) und einem diesem zugeordneten Ventilsitz (2) umfasst, wobei die Position des Ventilkörpers (1) relativ zum Ventilsitz (2) vom Druck im Ladetank abhängt, wobei der Ventilkörper hohl ist und dazu ausgelegt ist, einen weiteren Ventilkörper (6) aufzunehmen, und **dadurch gekennzeichnet, dass** zum Zusammenwirken mit dem weiteren Ventilkörper (6) ein weiterer Ventilsitz (7) am Ende des Ventilkörpers (1) bereitgestellt ist, welcher sich auf der Außenseite des Ventils oder des Ventilgehäuses (3) erstreckt, wobei die Druck/Durchflusseigenschaften des zusammenwirkenden Ventilkörpers (1)/Ventilsitzes (2) beziehungsweise des weiteren Ventilkörpers (6)/Ventilsitzes (7) zueinander unterschiedlich sind.

2. Ventil nach Anspruch 1, **dadurch gekennzeichnet, dass** das Ventil Magnete (4) umfasst, welche auf dem Ventilkörper beziehungsweise im Ventilgehäuse so vorgesehen sind, dass die Magnetkraft danach trachtet, den Ventilkörper gegen den Ventilsitz zu halten.

3. Ventil nach Anspruch 2, **dadurch gekennzeichnet, dass** wenigstens einer der Magnete in der axialen Richtung einstellbar ist.

4. Ventil nach einem beliebigen der Ansprüche 1-3, **dadurch gekennzeichnet, dass** der Ventilkörper und das Ventilgehäuse bei Betrachtung in einer axialen Richtung auf solch eine Weise geformt sind, dass der Durchflussquerschnitt zwischen den Teilen von der Position des Ventilkörpers im Ventilgehäuse abhängt.

5. Ventil nach einem beliebigen der Ansprüche 1-4, **dadurch gekennzeichnet, dass** der Ventilkörper federvorgespannt ist.

6. Ventil nach einem beliebigen der Ansprüche 1-5, **dadurch gekennzeichnet, dass** der Ventilkörper gewichtsbelastet ist.

7. Ventil nach einem beliebigen der Ansprüche 1-6, **dadurch gekennzeichnet, dass** der weitere Ventilkörper konzentrisch im Ventilkörper angeordnet ist und für axiale Bewegung relativ zum weiteren Ventilsitz ausgelegt ist, welcher am Ende des Ventilkörpers vorgesehen ist, der sich auf der Außenseite des Ventils oder des Ventilgehäuses erstreckt, und dass Kanäle im Ventilkörper auf solche Weise vorgesehen sind, dass der Druck im Ladetank den weiteren Ventilkörper weg vom weiteren Ventilsitz gelenkig abhebt.

8. Ventil nach Anspruch 7, **dadurch gekennzeichnet, dass** der weitere Ventilkörper federvorgespannt ist.

9. Ventil nach Anspruch 7 oder 8, **dadurch gekennzeichnet, dass** der weitere Ventilkörper gewichtsbelastet ist.

10. Ventil nach Anspruch 8 oder 9, **dadurch gekennzeichnet, dass** die Belastung einstellbar ist.

11. Ventil nach einem beliebigen der Ansprüche 2-10, wobei das Ventil mit dem Ventilsitz an einer Stelle zusammenwirkt, welche zwischen den Magneten und einem äußeren Teil des Ventilkörpers angeordnet ist, **dadurch gekennzeichnet, dass** der äußere Teil des Ventilkörpers einen im Wesentlichen zylindrischen Bereich umfasst, welcher einen größeren Durchmesser aufweist als das Durchgangsloch im Ventilsitz und der dazu ausgelegt ist, mit einer vorspringenden Schürze (14) auf dem Ventilgehäuse zusammenzuwirken, wobei die äußere Kontur des zylindrischen Bereichs der inneren Kontur der Schürze entspricht.

12. Ventil nach Anspruch 11, **dadurch gekennzeichnet, dass** die Schürze eine Höhe aufweist, so dass der Ventilkörper mit der Schürze entlang einer Hublänge zusammenwirkt, welche ungefähr der Hälfte der Gesamthublänge des Ventilkörpers entspricht.

13. Ventil nach Anspruch 11 oder 12, **dadurch gekennzeichnet, dass** der Durchmesser des zylindrischen Bereichs ungefähr 10% größer ist als das Durchgangsloch des Ventilsitzes.

## Revendications

1. Soupape d'évent pour citernes de cargaison, par exemple dans des pétroliers, ladite soupape comprenant un boîtier de soupape (3) avec un corps de soupape (1) déplaçable axialement et un siège de soupape (2) associé à celui-ci, la position du corps de soupape (1) par rapport au siège de soupape (2) dépendant de la pression dans la citerne de cargaison, le corps de soupape étant creux et prévu pour recevoir un corps de soupape supplémentaire (6), et **caractérisée en ce que**, pour l'interaction avec le corps de soupape supplémentaire (6), un siège de soupape supplémentaire (7) est prévu à l'extrémité du corps de soupape (1), lequel s'étend à l'extérieur de la soupape ou du boîtier de soupape (3), les caractéristiques pression/débit du corps de soupape (1) et du siège de soupape (2) coopérant et du corps de soupape (6) et du siège de soupape (7) supplémentaires étant respectivement mutuellement différentes.

2. Soupape selon la revendication 1, **caractérisée en ce que** la soupape comprend des aimants (4) qui sont prévus sur le corps de soupape et dans le boîtier de soupape respectivement, de telle sorte que la force magnétique tende à retenir le corps de soupape contre le siège de soupape.

3. Soupape selon la revendication 2, **caractérisée en ce qu'**au moins l'un des aimants est ajustable dans la direction axiale.

4. Soupape selon l'une quelconque des revendications 1 à 3, **caractérisée en ce que** le corps de soupape et le boîtier de soupape, vus en coupe axiale, sont formés de telle sorte que la zone de débit entre lesdites parties dépend de la position du corps de soupape dans le boîtier de soupape.

5. Soupape selon l'une quelconque des revendications 1 à 4, **caractérisée en ce que** le corps de soupape est chargé par ressort.

6. Soupape selon l'une quelconque des revendications 1 à 5, **caractérisée en ce que** le corps de soupape est chargé par un poids.

7. Soupape selon l'une quelconque des revendications 1 à 6, **caractérisée en ce que** le corps de soupape supplémentaire est agencé concentriquement dans le corps de soupape et est prévu pour se déplacer axialement par rapport au siège de soupape supplémentaire qui est prévu à l'extrémité du corps de soupape qui s'étend à l'extérieur de la soupape ou du boîtier de soupape, et **en ce que** des canaux sont prévus dans le corps de soupape de telle sorte que la pression dans la citerne de cargaison actionne le corps de soupape supplémentaire à l'écart du siège de soupape supplémentaire.

8. Soupape selon la revendication 7, **caractérisée en ce que** le corps de soupape supplémentaire est chargé par ressort.

9. Soupape selon la revendication 7 ou 8, **caractérisé en ce que** le corps de soupape supplémentaire est chargé par un poids.

10. Soupape selon la revendication 8 ou 9, **caractérisée en ce que** la chargement est ajustable.

11. Soupape selon l'une quelconque des revendications 2 à 10, dans laquelle la soupape coopère avec le siège de soupape à un emplacement qui est situé entre les aimants et une partie externe du corps de soupape, **caractérisée en ce que** la partie externe du corps de soupape comprend une région substantiellement cylindrique qui présente un plus grand diamètre que le trou de dégagement dans le siège de soupape et qui est prévu pour coopérer avec une jupe saillante (14) sur le boîtier de soupape, le contour externe de la région cylindrique correspondant au contour interne de la jupe.

12. Soupape selon la revendication 11, **caractérisée en ce que** la jupe a une hauteur telle que le corps de soupape coopère avec la jupe le long d'une longueur de course qui est approximativement la moitié de la longueur de course totale du corps de soupape.

13. Soupape selon la revendication 11 ou 12, **caractérisée en ce que** le diamètre de la région cylindrique est approximativement 10 % plus grand que le trou de dégagement du siège de soupape.
